# EUROPEAN PATENT APPLICATION

(11) **EP 4 435 943 A1**
(43) Date of publication of application: **25.09.2024**
(21) Application number: 21964385.5
(22) Date of filing: 18.11.2021
(51) Int. Cl.: H01M 50/20, H01M 50/507, H01M 50/519, B60R 11/00

(54) **MULTIFUNCTIONAL MOUNTING BRACKET, BATTERY MOUNTING MODULE, AND BATTERY PACK**

(71) Applicant: Microvast, Inc., Stafford, TX 77477 (US)
(72) Inventor: SHEN, Mingfeng, Huzhou, Zhejiang Peoples Republic of China Zhejiang 313000 (CN); ZHONG, Cheng, Huzhou, Zhejiang Peoples Republic of China Zhejiang 313000 (CN); LI, Bin, Huzhou, Zhejiang Peoples Republic of China Zhejiang 313000 (CN)
(74) Representative: Zaboliene, Reda
(86) International application number: PCT/CN2021/131587
(87) International publication number: WO 2023/087228

(57) **Abstract**

The present application provides a multifunctional mounting bracket, comprising a mounting plate and a busbar mounting member. The busbar mounting member is connected to one side of the mounting plate; the mounting plate is used for mounting an LECU device; the busbar mounting member is used for mounting a busbar. The multifunctional mounting bracket provided by the present application can be used for simultaneously mounting and fixing the LECU device and the busbar, thereby simplifying mounting processes, reducing an occupation space, and saving costs. The present application further provides a battery mounting module and a battery pack.

## Description

### Technical Field

This application relates to the technical field of batteries, and in particular, to a multifunctional mounting bracket, a battery mounting module, and a battery pack.

### Description of Related Art

Battery packs, as the core component of electric vehicles, their structural design and safety performance directly affect the overall performance of electric vehicles. The LECU (Local Electrical Control Unit) device is a battery control system mounted inside the battery pack. The LECU device is usually fixed to the battery case through an LECU bracket.

### BRIEF SUMMARY OF THE APPLICATION

### Technical Problem

In the existing design, due to the fact that the LECU bracket is only used for mounting and fixing the LECU device, the smoke detector and the busbar need to be mounted and fixed using other separate brackets. Therefore, when installing the LECU device, the smoke detector and the busbar, three types of brackets need to be respectively mounted on the battery case first, and then the LECU device, the smoke detector and the busbar need to be mounted on each bracket separately. This not only complicates the mounting process and increases the space occupied, but also requires separate processing and production of these three brackets, making the manufacturing process of the brackets complex and the production cost high. At the same time, the sampling wiring harness connected to the LECU device has a large number and disorder arrangement, which not only makes the installation of the sampling wiring harness complex, but also easily affects the layout of other components.

### Technical Solution

The object of the present application is to provide a multifunctional mounting bracket, a battery mounting module, and a battery pack, aiming to solve the shortcomings of the related art mentioned above. The multifunctional mounting bracket can be used for mounting and fixing both the LECU device and the busbar simultaneously, thus simplifying the mounting process, reducing space occupation, and saving costs.

An embodiment of the present application provides a multifunctional mounting bracket comprising a mounting plate and a busbar mounting member. The busbar mounting member is connected to one side of the mounting plate, the mounting plate is used for mounting an LECU device, and the busbar mounting member is used for mounting a busbar.

In an achievable manner, the mounting plate comprises a first mounting surface and a second mounting surface which are oppositely arranged, both the first mounting surface and the second mounting surface are used for mounting the LECU device and/or a smoke detector.

In an achievable manner, the multifunctional mounting bracket further comprises a fixing part, the fixing part is connected to the mounting plate, and the fixing part is provided with an accommodating groove for mounting the LECU device and/or a smoke detector.

In an achievable manner, a bottom wall of the accommodating groove is provided with wiring harness holes for wiring harness of the LECU device and/or the smoke detector to pass through.

In an achievable manner, the fixing part is provided with a wire harness buckle for fixing the wire harness.

In an achievable manner, the multifunctional mounting bracket further comprises a reinforcing plate, and the reinforcing plate is connected to the mounting plate.

In an achievable manner, one end of the busbar mounting member is connected to the mounting plate, and the other end of the busbar mounting member is used for connecting the busbar.

In an achievable manner, one end of the busbar mounting member is provided with a connecting part for connecting the busbar.

In an achievable manner, both the mounting plate and the busbar mounting member are provided with weight reduction holes and/or wire harness fixing holes.

Another embodiment of the present application also provides a battery mounting module comprising the multifunctional mounting bracket described above. The battery mounting module further comprises an LECU device and a busbar. The LECU device is connected to the mounting plate, and the busbar is connected to the busbar mounting member.

In an achievable manner, the battery mounting module further comprises a smoke detector. The mounting plate comprises a first mounting surface and a second mounting surface which are oppositely arranged. The LECU device and/or the smoke detector are mounted and fixed on the first mounting surface and/or the second mounting surface.

A further embodiment of the present application also provides a battery pack comprising the battery mounting module described above.

### Beneficial Effects

The multifunctional mounting bracket provided in this application includes a mounting plate and a busbar mounting member. The mounting plate is used for mounting and fixing the LECU device, and the busbar mounting member is used for mounting and fixing the busbar. That is, the multifunctional mounting bracket can be used for mounting and fixing both the LECU device and the busbar simultaneously, thereby simplifying the mounting process and the production process of the bracket, saving bracket costs, and reducing the space occupied by the bracket. Furthermore, as a part of the structure, the busbar itself forms a stable high-strength frame structure with the mounting plate and the busbar mounting member, ensuring the mechanical performance of the overall structure. Meanwhile, the multifunctional mounting bracket has a compact structure and good lightweight performance, which is beneficial for improving the energy density of the battery pack and meeting the performance requirements of the battery.

### BRIEF DESCRIPTION OF THE DRAWINGS

FIG. 1 is a three-dimensional structural schematic diagram of the multifunctional mounting bracket in the embodiment of the present application.
FIG. 2 is a rear view of FIG. 1.
FIG. 3 is a top view of FIG. 1.
FIG. 4 is a side view of FIG. 1.
FIG. 5 is a structural schematic diagram of the battery mounting module in the embodiment of the present application.
FIG. 6 is an exploded structural schematic diagram of FIG. 5.
FIG. 7 is a structural schematic diagram after installing the smoke detector on the multifunctional mounting bracket in FIG. 5.
FIG. 8 is a structural schematic diagram after installing the busbar on the multifunctional mounting bracket in FIG. 5.
FIG. 9 is a structural schematic diagram after installing the wiring harness on the LECU device in FIG. 5.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) in the specification and claims of the present application are defined based on the position of the structure in the figures and the relative position between the structures in the figures, only for the clarity and convenience of expressing the technical solution. It should be understood that the use of these directional words should not limit the scope of protection in the present application.

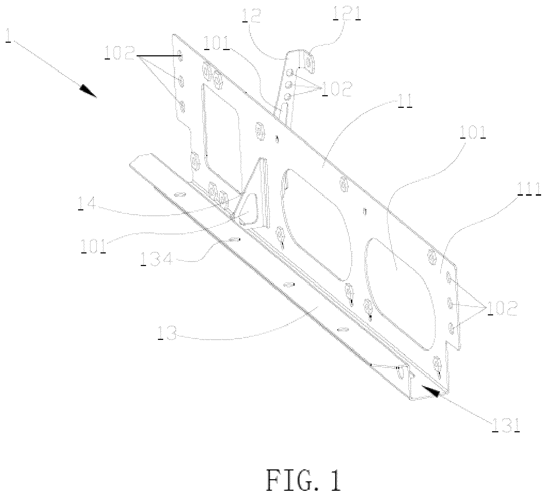

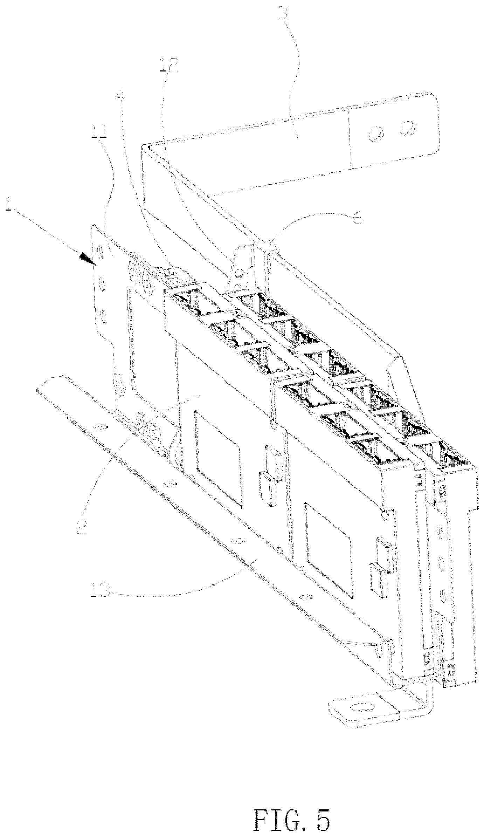

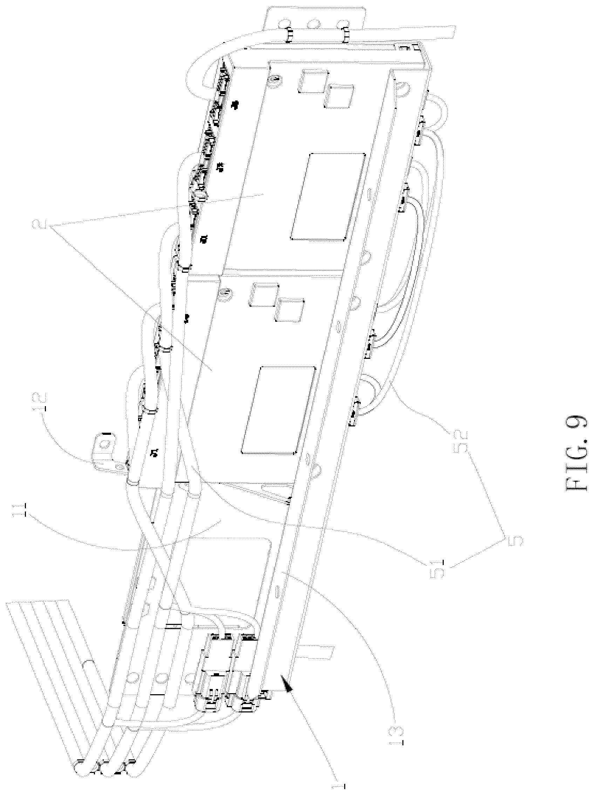

As shown in FIGs. 1 to 4, the multifunctional mounting bracket 1 provided in the present embodiment is mainly used to solve the mounting and fixing problems of an LECU (Local Electrical Control Unit, which is a battery management unit) device 2, a busbar 3, a smoke detector 4, and a wiring harness 5. The specific structures of the LECU device 2, the busbar 3 and the smoke detector 4 are shown in FIG. 5, and the specific structures of the wiring harness 5 are shown in FIG. 9. The multifunctional mounting bracket 1 includes a mounting plate 11 and a busbar mounting member 12. The busbar mounting member 12 is connected to one side of the mounting plate 11. The mounting plate 11 is used for mounting the LECU device 2, and the busbar mounting member 12 is used for mounting the busbar 3.

Specifically, the material of the multifunctional mounting bracket 1 can be metal or plastic, and it can be produced using methods such as metal machining and welding, metal die-casting, or plastic injection molding.

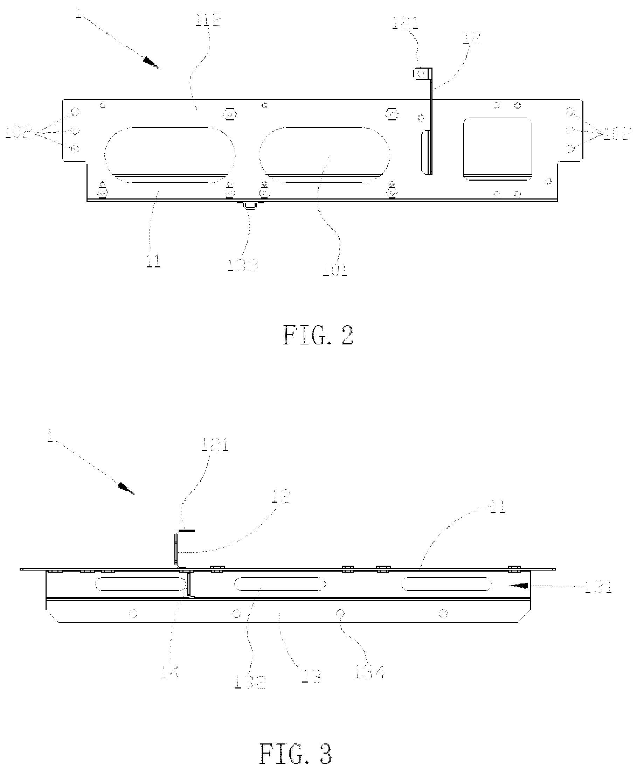

As shown in FIGs. 1 and 2, as an achievable manner, the mounting plate 11 includes a first mounting surface 111 and a second mounting surface 112, which are oppositely arranged. The first mounting surface 111 and the second mounting surface 112 are respectively located on the front and rear sides of the mounting plate 11. The first mounting surface 111 and the second mounting surface 112 are both used for mounting the LECU device 2 and/or the smoke detector 4, that is, the LECU device 2 and the smoke detector 4 can be mounted and fixed on either the first mounting surface 111 or the second mounting surface 112.

As shown in FIGs. 1 and 3, as an achievable manner, the multifunctional mounting bracket 1 further includes a fixing part 13. The fixing part 13 is fixedly connected to the mounting plate 11. The fixing part 13 is located on the side of the mounting plate 11 away from the busbar mounting member 12. The fixing part 13 is used to be mounted on and fixed with a battery case (not shown), that is, the multifunctional mounting bracket 1 is fixedly connected to the battery case through the fixing part 13.

Specifically, there are bracket mounting holes 134 on the fixing part 13, and the fixing part 13 can be fixedly connected to the battery case through bolts.

As an achievable manner, the fixing part 13 and the mounting plate 11 are integrated as an integral structure.

As shown in FIGs. 1 and 3, as an achievable manner, the fixing part 13 is provided with an accommodating groove 131 for mounting the LECU device 2 and/or the smoke detector 4. During installation, the LECU device 2 and/or the smoke detector 4 are inserted into the accommodating groove 131.

As shown in FIG. 3, as an achievable manner, the bottom wall of the accommodating groove 131 is provided with wiring harness holes 132 for the wiring harness 5 of the LECU device 2 and/or the smoke detector 4 to pass through.

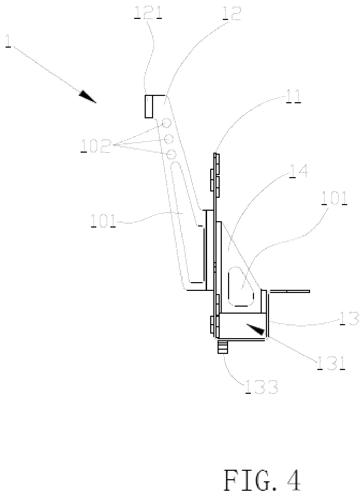

As shown in FIGs. 2 and 4, as an achievable manner, the fixing part 13 is provided with a wire harness buckle 133 for fixing the wire harness 5.

As shown in FIGs. 1 and 4, as an achievable manner, the multifunctional mounting bracket 1 further includes a reinforcing plate 14. Two ends of the reinforcing plate 14 are fixedly connected to the mounting plate 11 and the fixing part 13, respectively. The reinforcing plate 14 can play a role in strengthening the connection between the mounting plate 11 and the fixing part 13, effectively reducing the modal of the multifunctional mounting bracket 1, improving the fatigue strength and the structural strength.

As shown in FIGs. 1 and 4, as an achievable manner, one end of the busbar mounting member 12 is fixedly connected to the mounting plate 11, and the other end of the busbar mounting member 12 extends and protrudes outward from the mounting plate 11 for mounting the busbar 3.

As shown in FIGs. 1 and 4, as an achievable manner, one end of the busbar mounting member 12 away from the mounting plate 11 is provided with a connecting part 121 for connecting the busbar 3.

As shown in FIGs. 1 to 4, as an achievable manner, both the mounting plate 11 and the busbar mounting member 12 are provided with weight reduction holes 101 and wire harness fixing holes 102, and the reinforcing plate 14 is also provided with weight reduction holes 101.

Specifically, in this embodiment, the wire harness fixing holes 102 on the mounting plate 11 are provided on two opposite sides of the mounting plate 11. The wire harness 5 can be bound to the multifunctional mounting bracket 1 through ties (not shown). When binding, the tie passes through the wire harness fixing hole 102 and then wraps around the wire harness 5, thereby binding the wire harness 5 to the multifunctional mounting bracket 1. The weight reduction holes 101 can reduce the weight of the multifunctional mounting bracket 1, thereby causing the multifunctional mounting bracket 1 to have good lightweight performance, which is beneficial for improving the energy density of the battery.

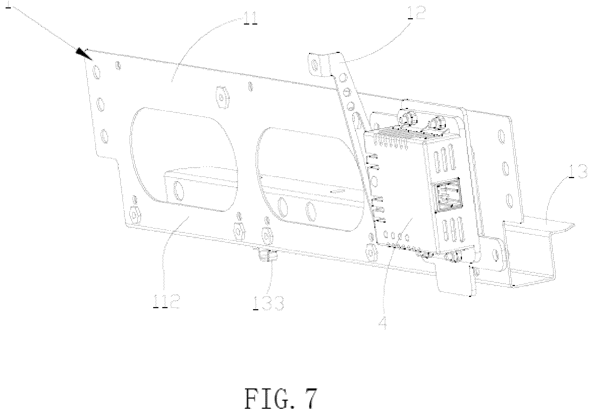

As shown in FIGs. 5 to 9, an embodiment of the present application also provides a battery mounting module which includes the multifunctional mounting bracket 1 as described above. The battery mounting module further includes an LECU device 2 and a busbar 3. The LECU device 2 is connected to the mounting plate 11, and the busbar 3 is connected to the busbar mounting member 12.

As shown in FIGs. 5 to 7, as an achievable manner, the battery mounting module further includes a smoke detector 4. The LECU device 2 and the smoke detector 4 are mounted and fixed on the first mounting surface 111 and/or the second mounting surface 112.

As an achievable manner, the multifunctional mounting bracket 1 is compatible to be mounted with different types of smoke detectors 4 to meet the different needs of customers. The LECU device 2 and the smoke detector 4 can be fixed to the multifunctional mounting bracket 1 by bolts to ensure vibration and other related requirements. The busbar 3 is used to connect to the high-voltage plug-in unit of the battery pack. The busbar 3 can be fixed on the multifunctional mounting bracket 1 through a buckle 6 or a tie.

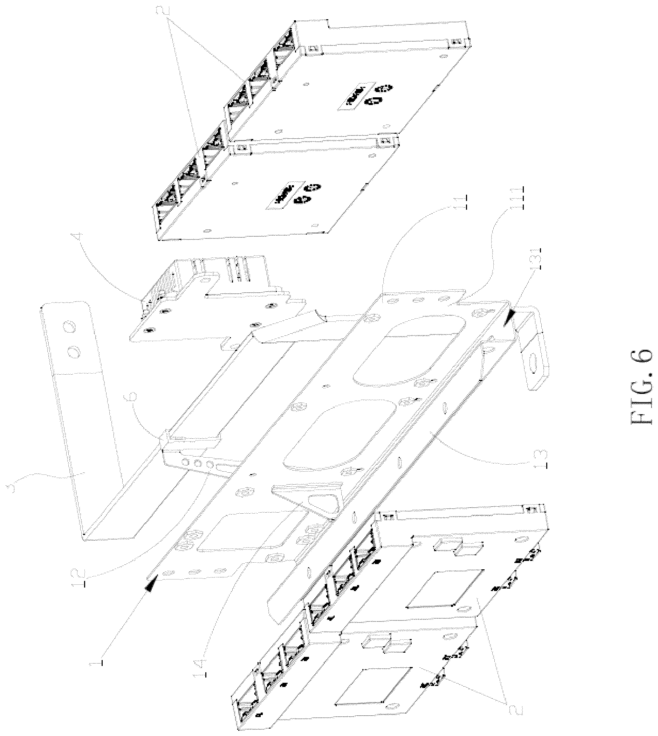

As shown in FIGs. 5 and 6, as an achievable manner, there are multiple LECU devices 2, with a portion of the LECU devices 2 mounted and fixed on the first mounting surface 111, and another portion of the LECU devices 2 mounted and fixed on the second mounting surface 112. That is, the multiple LECU devices 2 are mounted on both sides of the mounting plate 11, making it convenient for the wiring harness 5 to be routed and fixed.

As shown in FIGs. 5 and 6, as an achievable manner, the fixing part 13 is provided with an accommodating groove 131, and the LECU device 2 and/or the smoke detector 4 are inserted and mounted in the accommodating groove 131.

As shown in FIG. 9, as an achievable manner, the battery mounting module further includes a wire harness 5, and the wire harness 5 is connected to the LECU device 2. Of course, the wire harness 5 can also be the wire harness 5 connected to the smoke detector 4. The bottom wall of the accommodating groove 131 is provided with wire harness holes 132 for the wire harness 5 to pass through.

Specifically, the wire harness 5 includes a sampling wire harness 51 and a series wire harness 52. The sampling wire harness 51 is connected to the LECU device 2 and the battery (not shown) for sampling the voltage and temperature information of the battery. The series wire harness 52 is used for connection and communication between adjacent LECU devices 2. After passing through the wire harness holes 132 on the bottom wall of the accommodating groove 131, the series wire harness 52 is connected to the bottom of the LECU device 2. Both the sampling wire harness 51 and the series wire harness 52 can be fixed to the multifunctional mounting bracket 1 through ties, wherein the series wire harness 52 is fixed to the multifunctional mounting bracket 1 through the wire harness buckle 133, and the sampling wire harness 51 is fixed to the multifunctional mounting bracket 1 through the wire harness fixing holes 102, thereby ensuring that the sampling wire harness 51 and the series wire harness 52 do not come loose during use.

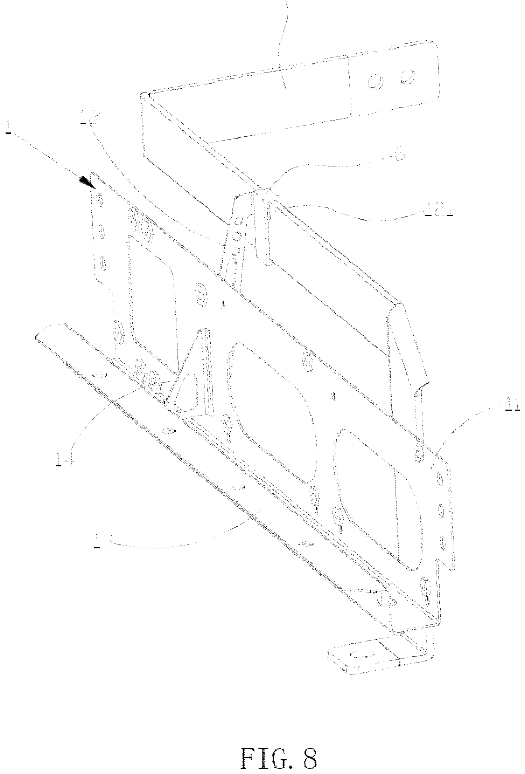

As shown in FIG. 8, as an achievable manner, one end of the busbar mounting member 12 is fixedly connected to the mounting plate 11, and the other end of the busbar mounting member 12 extends and protrudes outward from the mounting plate 11. One end of the busbar mounting member 12 away from the mounting plate 11 is provided with a connecting part 121, and the busbar 3 is mounted and fixed on the connecting part 121.

Specifically, in this embodiment, the end of the busbar mounting member 12 away from the mounting plate 11 extends and protrudes upwards, and the height of the connecting part 121 is greater than the height of the top of the mounting plate 11, so that the layout and installation of the wiring harness 5 is avoided from being affected after the mounting of the busbar 3.

The present embodiment also provides a battery pack, which includes the battery mounting module as described above.

The multifunctional mounting bracket 1 and the battery mounting module provided in the present embodiment have the following advantages:
(1). The multifunctional mounting bracket 1 can be used for simultaneously mounting and fixing the LECU device 2, the busbar 3, the smoke detector 4 and the wiring harness 5, thereby simplifying the mounting process and the production process of the bracket, saving bracket costs, and reducing the space occupied by the bracket. Furthermore, as a part of the structure, the busbar 3 itself forms a stable high-strength frame structure with the mounting plate 11 and the busbar mounting member 12, ensuring the mechanical performance of the overall structure.
(2). The multifunctional mounting bracket 1 has a compact structure, and there are multiple weight reduction holes 101 on the multifunctional mounting bracket 1, causing the multifunctional mounting bracket 1 to have good lightweight performance, which is beneficial for improving the energy density of the battery pack and meeting the performance requirements of the battery.
(3). The multifunctional mounting bracket 1 is provided with a wire harness buckle 133 and wire harness fixing holes 102, which facilitates the binding of the wire harness 5 using ties and optimizes the fixing of the wire harness 5.

The above is only the specific implementation of the present application, but the scope of protection of the present application is not limited to this. Any skilled person familiar with the technical field within the scope of the disclosed technology can easily think of changes or replacements, which should be covered within the scope of protection of the present application. Therefore, the scope of protection of the present application shall be based on the protection scope of the claims.

### Industrial applicability

The multifunctional mounting bracket provided in this application includes a mounting plate and a busbar mounting member. The mounting plate is used for mounting and fixing the LECU device, and the busbar mounting member is used for mounting and fixing the busbar. That is, the multifunctional mounting bracket can be used for mounting and fixing both the LECU device and the busbar simultaneously, thereby simplifying the mounting process and the production process of the bracket, saving bracket costs, and reducing the space occupied by the bracket. Furthermore, as a part of the structure, the busbar itself forms a stable high-strength frame structure with the mounting plate and the busbar mounting member, thus ensuring the mechanical performance of the overall structure. Meanwhile, the multifunctional mounting bracket has a compact structure and good lightweight performance, which is beneficial for improving the energy density of the battery pack and meeting the performance requirements of the battery.

## Claims

1. A multifunctional mounting bracket, comprising a mounting plate (11) and a busbar mounting member (12), wherein the busbar mounting member (12) is connected to one side of the mounting plate (11), the mounting plate (11) is used for mounting an LECU device (2), and the busbar mounting member (12) is used for mounting a busbar (3).

2. The multifunctional mounting bracket as claimed in claim **1,** wherein the mounting plate (11) comprises a first mounting surface (111) and a second mounting surface (112) which are oppositely arranged, both the first mounting surface (111) and the second mounting surface (112) are used for mounting the LECU device (2) and/or a smoke detector (4).

3. The multifunctional mounting bracket as claimed in claim **1,** wherein the multifunctional mounting bracket (1) further comprises a fixing part (13), the fixing part (13) is connected to the mounting plate (11), and the fixing part (13) is provided with an accommodating groove (131) for mounting the LECU device (2) and/or a smoke detector (4).

4. The multifunctional mounting bracket as claimed in claim **3,** wherein a bottom wall of the accommodating groove (131) is provided with wiring harness holes (132) for wiring harness (5) of the LECU device (2) and/or the smoke detector (4) to pass through.

5. The multifunctional mounting bracket as claimed in claim **4,** wherein the fixing part (13) is provided with a wire harness buckle (133) for fixing the wire harness (5).

6. The multifunctional mounting bracket as claimed in claim **1,** wherein the multifunctional mounting bracket (1) further comprises a reinforcing plate (14), and the reinforcing plate (14) is connected to the mounting plate (11).

7. The multifunctional mounting bracket as claimed in claim **1,** wherein one end of the busbar mounting member (12) is connected to the mounting plate (11), and the other end of the busbar mounting member (12) is used for connecting the busbar (3).

8. The multifunctional mounting bracket as claimed in claim **1,** wherein one end of the busbar mounting member (12) is provided with a connecting part (121) for connecting the busbar (3).

9. The multifunctional mounting bracket as claimed in claim **1,** wherein both the mounting plate (11) and the busbar mounting member (12) are provided with weight reduction holes (101) and/or wire harness fixing holes (102).

10. A battery mounting module, comprising the multifunctional mounting bracket (1) as claimed in any one of claims **1** to **9,** wherein the battery mounting module further comprises an LECU device (2) and a busbar (3), the LECU device (2) is connected to the mounting plate (11), and the busbar (3) is connected to the busbar mounting member (12).

11. The battery mounting module as claimed in claim **10,** wherein the battery mounting module further comprises a smoke detector (4), the mounting plate (11) comprises a first mounting surface (111) and a second mounting surface (112) which are oppositely arranged, the LECU device (2) and/or the smoke detector (4) are mounted and fixed on the first mounting surface (111) and/or the second mounting surface (112).

12. A battery pack, comprising the battery mounting module as claimed in any one of claims **10** or **11.**
